# EUROPÄISCHE PATENTSCHRIFT

(11) **EP 1 528 884 B1**
(45) Veröffentlichungstag und Bekanntmachung des Hinweises auf die Patenterteilung: **10.01.2007**
(21) Anmeldenummer: 03783890.1
(22) Anmeldetag: 28.07.2003
(51) Int. Cl.: A47J 37/12, A47J 37/04

(54) **FRITIERVORRICHTUNG**
FRYING DEVICE
DISPOSITIF DE FRITURE

(30) Priorität: 09.08.2002 CH 138602
(43) Veröffentlichungstag der Anmeldung: 11.05.2005
(73) Patentinhaber: Maurer, Ulrich, 8304 Wallisellen (CH)
(72) Erfinder: Maurer, Ulrich, 8304 Wallisellen (CH)
(74) Vertreter: Peege, Klaus
(86) Internationale Anmeldenummer: PCT/CH2003/000512
(87) Internationale Veröffentlichungsnummer: WO 2004/014206

(56) Entgegenhaltungen:
- EP-A- 0 379 755
- WO-A-96/19934
- CH-A- 691 422
- DE-A- 3 904 008

## Beschreibung

Die Erfindung betrifft eine Fritiervorrichtung zum schwimmenden Backen von Lebens- und Genussmittelportionen, insbesondere in Stücken vereinzelter Portionen nach dem Oberbegriff des Patentanspruches 1.

Unter schwimmend backen wird die Aufbereitung von Lebens- oder anderen Genussmitteln (folgend zusammengefasst Lebensmittel genannt) verstanden, die sich dadurch kennzeichnet, dass Lebensmittel in heissem Fett schwimmend gegart, d.h. für den Verzehr geeignet durchbacken werden. Für diese Art der Lebensmittelaufbereitung hat sich auch die Bezeichnung "fritieren", für Vorrichtungen zum Fritieren die der "Friteuse" durchgesetzt, die folgend in der Darstellung der Erfindung Verwendung findet. Die Friteuse nach der Erfindung ist insbesondere auf die Aufbereitung von Haufwerken aus vergleichsweise gleich grossen streifenförmigen Stücken ausgerichtet.

Ein häufig zum Verzehr bestimmtes Haufwerk der beschriebenen Art wird aus Kartoffeln gebildet, das für den Verzehr durch Fritieren zubereitet wird. Allgemein bekannt sind solche Haufwerke unter der Bezeichnung "Pommes Frites Portionen".

Bekannt ist eine Vorrichtung (CH 691 422 A5) zur Herstellung von Pommes Frites Portionen, die letztere ausgehend von einem rohen oder vorgebackenen Haufwerk selbsttätig herstellt. Dazu umfasst die bekannte Vorrichtung im wesentlichen einen Vorratsbehälter für ungegarte Pommes Frites und eine Fritiertrommel, wobei der Vorratsbehälter über eine Rohrverbindung mit der Fritiertrommel in Verbindung steht.

Eine im Vorratsbehälter wirkende Schöpfeinrichtung bildet ein Haufwerk vorbestimmter Menge und fördert diese in das Rohr, welches das Haufwerk in die Fritiertrommel leitet. In der Fritiertrommel wird das Haufwerk in heissem Oel durchbacken und danach aus der Fritiertrommel gefördert.

In der flüssiges Bratfett enthaltenden Fritiertrommel dreht ein Wender, der an seinem Umfang radial abragende und in gleicher Teilung am Umfang angeordnete Rechen umfasst, die zur Garung ein Haufwerk durch das heisse Bratfett leiten und anschliessend aus der Vorrichtung austragen. Dabei verbraucht sich das Bratfett und ist deshalb periodisch auszutauschen. Der Austausch erfolgt vermittels eines Ablasshahnes, der das verbrauchte Bratfett aus der Fritiertrommel austrägt, wobei anschliessend die Fritiertrornmel stirnseitig wieder aufgefüllt wird. Vor Auffüllung ist die Vorrichtung zu reinigen, was einen grossen Zeit- und Arbeitsaufwand bedeutet, um die Vorrichtung in hygienisch einwandfreiem Zustand zu halten, hinzu tritt die Gefahr des Verlustes von Backfett durch den Austausch.

Hiervon ausgehend hat sich die Erfindung die Aufgabe gestellt, eine Fritiervorrichtung so auszugestalten, dass der Bratfettaustausch schnell und ohne Gefahr eines unbeabsichtigten Backfettverlustes vorgenommen werden kann und die Aufgabe wird erfindungsgemäss vermittels der kennzeichnenden Merkmale des Anspruches 1 gelöst.

Weitere vorteilhafte Ausgestaltungen der erfindungsgemässen Lösung nach Patentanspruch 1 ergeben sich durch die Merkmale der dem Patentanspruch 1 folgenden Patentansprüche.

Weitere Vorteile, Merkmale und Einzelheiten der Erfindung ergeben sich aus der folgenden Beschreibung eines bevorzugten Austührungsbeispieles und der Zeichnung, es stellen dar:
- Fig. 1: Eine erfindungsgemäss ausgestattete Fritiervorrichtung in der Vorderansicht schematisch und im Schnitt dargestellt.
- Fig. 2: Eine Fritiervorrichtung nach Fig. 1 in der Seitenansicht und im Schnitt.

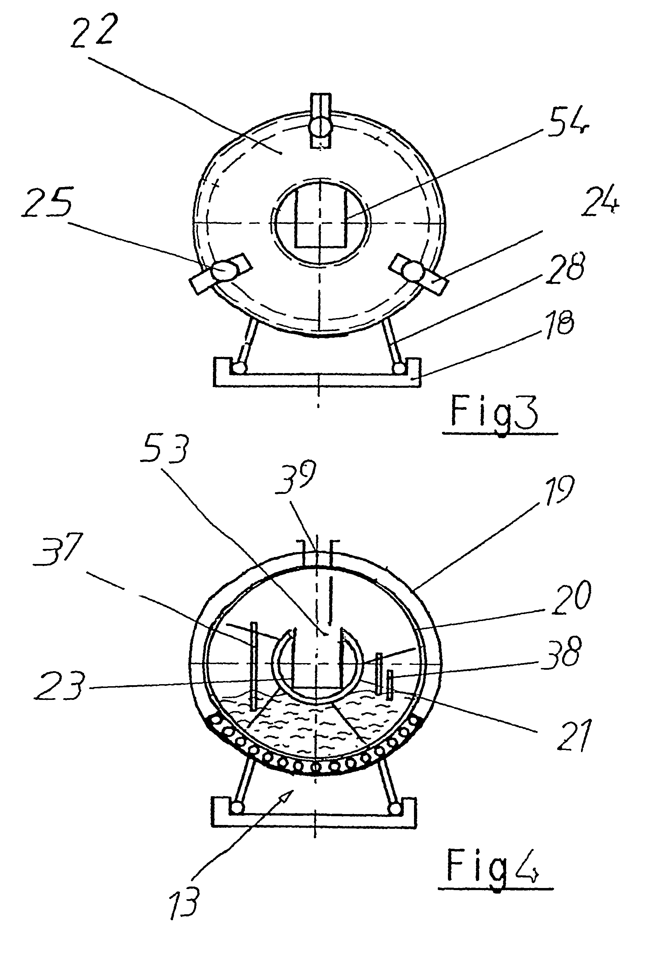

- Fig. 3: Eine Fritiertrommel in der Vorderansicht.

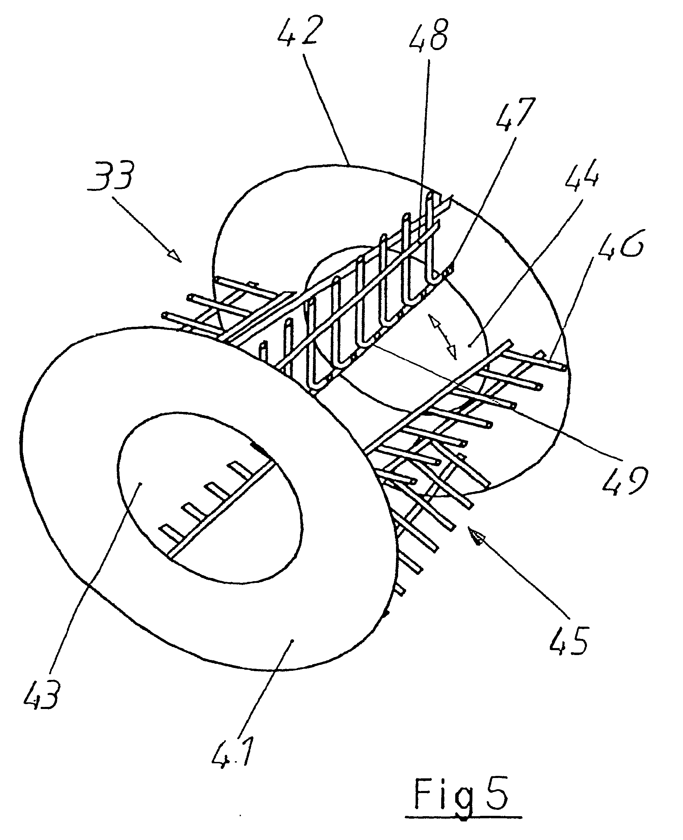

- Fig. 4: Die Fritiertrommel gemäss Fig. 3 im Vertikalschnitt.
- Fig. 5: Einen Wender in perspektivischer Darstellung.

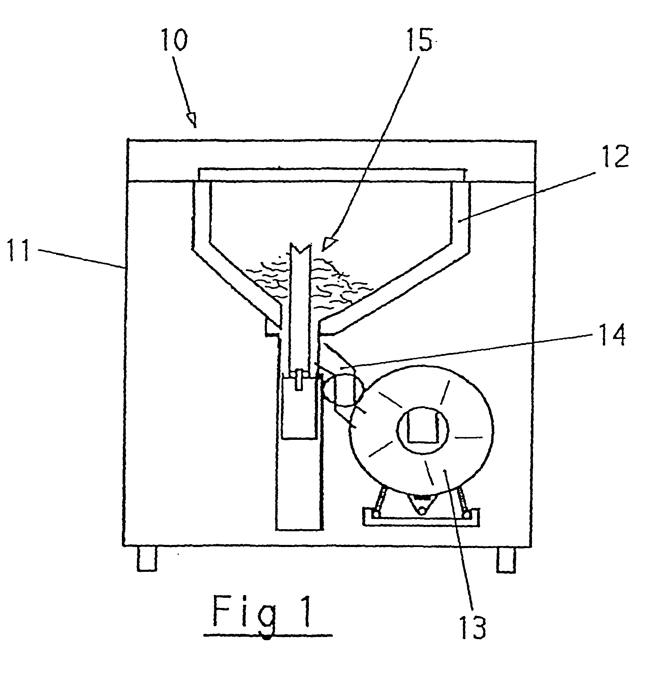

Fig. 1 zeigt eine Vorrichtung zum schwimmenden Backen von Lebensmittelportionen, folgend Fritiervorrichtung 10 genannt. Die Fritiervorrichtung 10 umfasst ein Gehäuse 11, in dem ein Vorratsbehälter 12 für Fritiergut und die Gareinrichtung 13, die über ein Förderrohr 14 mit dem Vorratsbehälter 12 verbunden ist, aufgenommen sind. Durch geeignete Mittel, beispielsweise ein Schöpfrohr 15, werden Portionen im Vorratsbehälter 12 abgemessen, in das Förderrohr 14 geleitet und von dort der Gareinrichtung 13 zugeleitet, wobei nach erfolgter Garung die Portionen aus der Gareinrichtung 13 abgefördert werden.

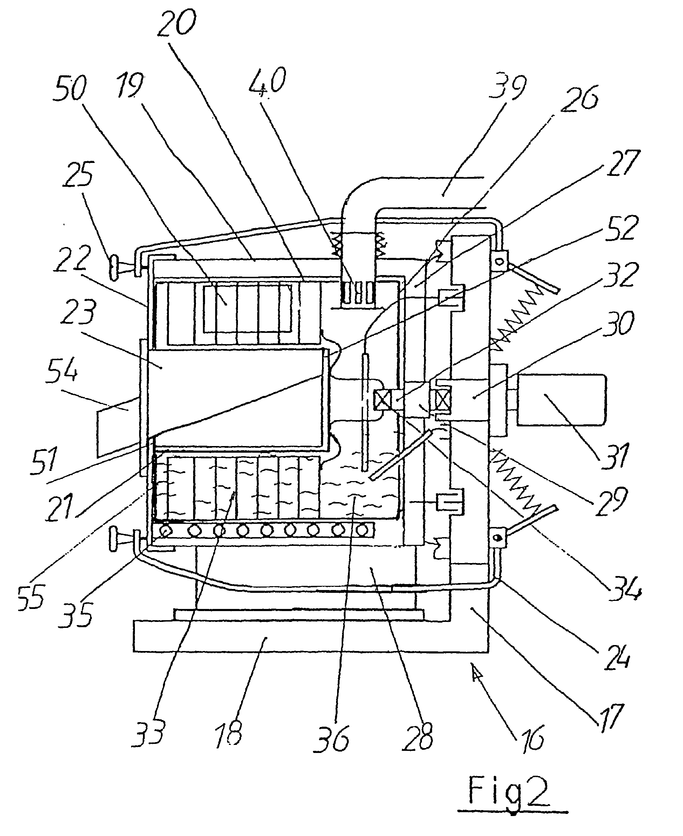

Fig. 2 zeigt eine nach der Erfindung ausgebildete Gareinrichtung 13 im Längsschnitt. Die Gareinrichtung 13 umfasst einen L-förmigen Stützrahmen 16 mit einem senkrechten 17 und waagrechten Schenkel 18. Auf dem waagrechten Schenkel 18 stützen sich drei Trommeln 19, 20, 21, die Servicetrommel 19, die Gartrommel 20 und die Austragstrommel 21 ab. Die Servicetrommel 19 ist als einends geschlossene und anderenends offene Hülse ausgebildet, in der die Gartrommel 20 mit Austragstrommel 21 eingeschoben aufgenommen sind. Die einends offene Servicetrommel 19 ist mit einem Deckel 22 verschlossen, der die Gartommel 20 mit Austragstrommel 21 in axialer Richtung unverschieblich festlegt. In der Austragstrommel 21 ist eine Förderrutsche 23 vorgesehen, deren abstromseitiges Ende den Deckel 22 durchgreift. Gegen die offene Stirnfläche der Servicetrommel 19 gedrückt wird der Deckel 22 von vorzugsweise drei Schwenkbügel 24, die einends schwenkbar am senkrechten Schenkel 17 angelenkt sind und anderenends an ihren freien Enden vermittels Schrauben 25 den Deckel 22 gegen die ringförmige Stirnfläche der Servicetrommel drücken. Die Servicetrommel 19 ist über Stützen 28 mit dem waagrechten Schenkel 18 verbunden. Der Boden 26 der Gartrommel 20 und der Boden 27 der Servicetrommel 19 wird mittig von einer Antriebswelle 29 durchgriffen, die auf Seiten des senkrechten Schenkels 17 mit dem Abtrieb 30 eines Elektromotors 31, der den senkrechten Schenkel 17 durchgreift, verbunden ist. Der freie, in die Gartrommel 20 ragende Wellenstumpf 32 ist über eine Steckkupplung 34 mit dem Wender 33 verbunden, der sich um die feststehende Austragstrommel 21 dreht.

In die Umfangswandung der Servicetrommel 19, vorzugsweise in ihre parallel zum waagrechten Schenkel 18 verlaufende untere Hälfte, ist eine elektrische Heizung 35 eingelassen, die das Garfett 36 in der Gartrommel 20 auf eine bestimmte Temperatur bringt und hält. Der Füllstand und die Temperatur des flüssigen Garfettes 36 werden vermittels eines Oelstandmessers 37 und Thermostaten 38 in der Gartrommel 20 überwacht.

Die als Hohlzylinder ausgebildete und allseits geschlossene Gartrommel 20 ist mit einem Abzugsrohr 39 versehen, mit dem verdampftes Garfett 36 und andere flüchtige Verdampfungsprodukte aus der Gartrommel 20 abgeführt werden. Das Abzugsrohr 39 mit seinem Eintrittsende 40 ist verschiebbar in die Umfangswandung der Servicetrommel 19 und die der Gartrommel 20 eingelassen. Soll die Gartrommel 20 ausgewechselt werden, wird das Abzugsrohr 39 soweit zurückgezogen, bis sein freies Ende die Umfangswandung der Gartrommel 20 durchfahren und so die Gartrommel 20 für eine axiale Verschiebung freigegeben hat. Bevorzugt ist das Abzugsrohr 39 am obersten Punkt einer Senkrechten zum waagrechten Schenkel 18 in die Umfangswandungen der Gartrommel 20 und Servicetrommel 19 eingelassen. Gemäss Fig. 5 besteht der mit der Steckkupplung 34 des Wellenstumpfes 32 verbundene Wender 33 aus zwei axial zueinander beabstandeten Ringen 41, 42. Der äussere Durchmesser der Ringe 41, 42 entspricht etwa dem Innendurchmesser der Gartrommel 20, so dass sich die Ringe 41, 42 in der Gartrommel 20 drehen können. Der Durchmesser der mittigen Ausnehmungen 43, 44 ist etwas grösser als der Aussendurchmesser der Austragstrommel 21, so dass sich die Ringe 41, 42 in der Gartrommel 20 und um die Austragstrommel 21 drehen können. Zwischen den Ringen 41, 42 sind in gleichmässiger Teilung mindestens zwei, vorzugsweise fünf, sich axial erstreckende, die Ringe 41, 42 miteinander fest verbundene Gitter 45 vorgesehen. Die Gitter 45 bestehen aus nebeneinander beabstandet angeordneten Stäben 46, die senkrecht zur Längsachse des Wenders 33 verlaufen und vermittels einem inneren Träger 47 und äusseren Träger 48, die beide parallel zur Längsachse des Wenders 33 verlaufen, verbunden sind. Der innere Träger 47 befindet sich nahe dem äusseren Umfang der mittigen Ausnehmung des Ringes 41, 42, während der äussere Träger 48 sich nahe dem äusseren Umfang der Ringe 41, 42 befindet. Die mit dem inneren Träger 47 verbundenen Enden der Stäbe 46 weisen radiusförmige, von dem inneren Träger 47 abragende Kröpfungen 49 auf. Die Umfangswandung der Servicetrommel 19 und die der Gartrommel 20 weisen deckungsgleich angeordnete Eintragsöffnungen 50 zur Beschikkung der Gartrommel 20 auf, in diese Eintragsöffnungen 50 mündet das Förderrohr 14 aus.

In der Gartrommel 20 aufgenommen ist die Austragstrommel 21, die axial konzentrisch zur Gartrommel 20 verläuft. Die Austragstrommel 21 ist ein beidseits durch Stirnwandungen 51, 52 verschlossener Hohlzylinder. In Längsrichtung, von einer Stirnwand 51, 52 zur anderen verlaufend, ist in der Umfangswandung der Austragstrommel 21 eine schlitzförmige, die Umfangswandung durchgreifende Ausnehmung 53 vorgesehen. Die Ausnehmung 53 mündet auf die im Inneren der Austragstrommel 21 angeordnete, kastenförmige Förderrutsche 23 aus. Die Förderrutsche 23 ist im Querschnitt U-förmig ausgebildet und die parallel aufragenden Schenkel des Profils sind mit der inneren Oberfläche der Austragstrommel 21 verbunden, so dass durch die Eintragsöffnung 50 auf die Förderrutsche 23 fallendes Fritiergut nicht in das Innere der Austragstrommel 21 gelangen kann. Die Förderrutsche 23 verläuft zur Umfangsfläche der Austragstrommel 21 in Richtung auf vordere Stirnwand 51 abfallend geneigt und durchgreift die vordere Stirnwand 51 mit einer Verlängerung 54, die von der vorderen Stirnwand 51 unter einem Winkel stehend abragt. Alle Teile der Austragstrommel 21, also vordere Stirnwand 51 und hintere Stirnwand 52, das sich dazwischen erstreckende Rohr und die Förderrutsche 23 sind lösbar aneinander befestigt, so dass die Austragstrommel 21 zu Unterhalts-, beispielsweise Reinigungszwecken, leicht auseinandergenommen und wieder zusammengesetzt werden kann. Die vordere Stirnwand 51 der Austragstrommel 21 ist in konzentrischer Anordnung und lösbar auf der Innenseite (Seite zum Gartrommelinneren) des Deckels 55 der Gartrommel 20 angeordnet, wobei im Montagezustand die Verlängerung 54 der Förderrutsche 23 auch die Deckel 22 und 55 durchläuft.

Aus Vorstehendem ist offensichtlich, dass die Fritiervorrichtung 10 einfach und schnell betriebsbereit zu halten ist. Bei Wechsel des Garfettes 36 werden die Schrauben 25 gelöst und die Schwenkbügel 24 ausser Eingriff mit dem Deckel 22 gebracht. Folgend wird der Deckel 22 von der Servicetrommel 19 abgezogen, die Gartrommel 20 mit dem verbrauchten Garfett kann nun nach Ausfahren des Abzugsrohres 39 und Lösen der Steckkupplung 34 als eine Einheit aus der Servicetrommel 19 herausgezogen und durch eine Gartrommel 20 mit unverbrauchtem Garfett durch Einschieben in die Servicetrommel 19 ersetzt werden. Durch Aufbringen des Dekkels 22, Rückschwenken der Schwenkbügel 24 und Anziehen der Schrauben 25 ist die Gartrommel 20 in der Servicetrommel 19 festgelegt und nach Anschluss des Abzugsrohres 39 und des Antriebes 31 betriebsbereit. Die Gartrommel 20 ist, mit Ausnahme des Anschlusses für das Abzugsrohr 39, allseits geschlossen. Da der Stand flüssigen Garfettes nicht bis zur Anschlussöffnung für das Abzugsrohr 39 reicht, steht diese, auch verschliessbare Öffnung, einer fettverlustfreien Handhabung der Gartrommel 20 bei deren Austausch nicht entgegen. Erreicht wird mit einer Gartrommel 20 der beschriebenen Ausgestaltung, dass anlässlich deren Austausch das Innere der Servicetrommel 19 mit einfachen Mitteln und ohne grossen Zeitaufwand hygienisch in einwandfreiem Zustand gehalten und sichergestellt werden kann, dass durch die praktisch geschlossene Gartrommel 20 ein Bratfettverlust, der die Fritiervorrichtung oder deren Aufstellungsort verschmutzen würde, ausgeschlossen wird. Wie die Austragstrommel 21 ist auch die Gartrommel 20 aus lösbar miteinander verbundenen Einzelteilen hergestellt, die als solche einfach zu reinigen sind. Mit der Erfindung wird über die Ausgestaltung der Aufnahme einer Gartrommel in eine Servicetrommel ein einfacher und schneller Ein- und Ausbau der Gartrommel und aufgrund ihrer allseits geschlossenen Bauweise eine fettverlustfreie Montage, d.h. Austausch erreicht. Erreicht mit der Erfindung ist auch, dass eine bezüglich ihres Füllstandes mit Bratfett allseits geschlossene Gartrommel zum Zwecke der Reinigung ihrer Bestandteile leicht zerlegbar ist.

Auf der Innenseite der Gartrommel 20 ist die Eintrittsöffnung 50 durch eine vermittels eines Scharnieres (nicht gezeigt) schwenkbare Klappe 57 verschlossen. In Schliessstellung kann sie beispielsweise durch Federdruck gehalten werden. Geöffnet wird die Eintrittsöffnung 50 durch aus dem Förderrohr 14 nachrutschende Portionen, die die Klappe 57 aufschwenken. Nach Durchtritt einer Portion geht die Klappe in Schliessstellung zurück. Erreicht wird mit der Klappe 57, dass sie im Falle eines Brandes des Backfettes den Sauerstoffzutritt zur Gartrommel 20 unterbindet. Im Normalbetrieb dagegen verhindert die Klappe 57, dass verdunstetes Bratfett in Richtung auf den Vorratsbehälter 12 aufsteigt. Die Verlängerung 54 der Förderrutsche 23 ist vermittels eines Verschlusses 56 abgedeckt, der wie die Förderrutsche 23 gleichermassen im Querschnitt U-förmig ausgebildet ist. Je nach Bemessung des Verschlusses 56 kann er die Verlängerung 54 überdecken oder in letzte einschwenken. so dass das abstromseitige Ende (Stirnseite) der Verlängerung 54 und die längslaufende offene Fläche der Verlängerung 54 verschlossen sind. Der Verschluss 56 ist an die abstromseitige Stirnwand der Austragstrommel 21, die von der Förderrutsche 23 durchgriffen wird, schwenkbar angelenkt. Geöffnet und geschlossen wird er durch einen Antrieb (nicht gezeigt), der elektrisch, hydraulisch oder pneumatisch betreibbar sein kann. Geöffnet wird der Verschluss 56 wenn Backgut aus der Austragstrommel 21 abgefördert wird, ansonsten ist die Verlängerung 54 geschlossen. Durch den Verschluss 56 wird verhindert, dass verdunstetes Backfett aus der Gartrommel 20 über die Austragstrommel 21 aus der Fritiervorrichtung 10 in die Umgebung entweichen kann, ferner verhindert der Verschluss 56 einen von aussen vorgenommenen Eintrag in das Backfett und im Brandfall verhindert der Verschluss 56 einen Sauerstoffzutritt. Im Abzugsrohr 39 ist ein Ventil 58 angeordnet, das im Normalbetrieb offen ist, sich bei Entwicklung eines Brandes selbsttätig schliesst, so dass ein Sauerstoffzutritt über das Abzugsrohr unterbrochen ist.

## Patentansprüche

1. Fritiervorrichtung zum schwimmenden Backen von Lebens- und Genussmittelportionen, insbesondere in Stücken vereinzelter Portionen, umfassend einen Vorratsbehälter und eine über ein Förderrohr mit dem Vorratsbehälter verbundene, verflüssigtes Bratfett enthaltene Gartrommel mit darin drehend aufgenommenen, gegarten Portionen in eine Austragstrommel mit abfördernder Förderrutsche fördernden Wender, **dadurch gekennzeichnet, dass** die Gartrommel (20) als ein allseits geschlossener Hohlzylinder ausgebildet und axial verschiebbar in einer Servicetrommel (19) aufgenommen ist.

2. Fritiervorrichtung nach Anspruch 1, **dadurch gekennzeichnet, dass** in der Gartrommel (20) ein Backgut aus der Gartrommel (20) abfördernde Austragstrommel (21) und ein in die Austragstrommel (21) drehend fördernder Wender (33) angeordnet ist.

3. Fritiervorrichtung nach Anspruch 2, **dadurch gekennzeichnet, dass** der Wender (33) über eine Steckkupplung (34) mit dem Abtrieb (30) eines Elektromotors (31) verbunden ist.

4. Fritiervorrichtung nach Anspruch 2, **dadurch gekennzeichnet, dass** die Austragstrommel (21) eine schlitzförmige Ausnehmung (53) mit einer sich an die Ausnehmung (53) anschliessenden Förderrutsche (23) aufweist.

5. Fritiervorrichtung nach Anspruch 4, **dadurch gekennzeichnet, dass** die Förderrutsche (23) als ein U-Profil ausgebildet ist.

6. Fritiervorrichtung nach Anspruch 5, **dadurch gekennzeichnet, dass** parallele Schenkel des U-Profiles mit der inneren Oberfläche des rohrförmigen Teiles der Austragstrommel (21) in Eingriff stehen.

7. Fritiervorrichtung nach einem der Ansprüche 4 bis 6, **dadurch gekennzeichnet, dass** die abwärts geneigte Förderrutsche (23) mit einer Verlängerung (54) einen Deckel (55) der Gartrommel (20) und einen Deckel (22) der Servicetrommel (19) durchgreift.

8. Fritiervorrichtung nach einem der Ansprüche 1 bis 7, **dadurch gekennzeichnet, dass** die Gartrommel (20) und die Austragstrommel (21) in ihre Einzelteile zerlegbar ausgebildet sind.

## Claims

1. A frying device for the cooking while swimming of portions of foodstuffs and pastries or similar, especially in pieces of individual portions, comprising a storage container and a frying drum containing liquefied cooking fat that is connected to the storage container by means of a transportation pipe, the frying drum accommodating a revolving agitator that conveys the cooked portions onto a discharging conveyor chute, **characterized in that** the frying drum (20) is designed as a hollow cylinder closed on all sides and is accomodated in a service drum (19) in such a manner as to be axially displaceable.

2. A frying device in accordance with claim 1, **characterized in that** in the frying drum (20) there is arranged a discharge drum (21) that removes the fried material from the frying drum (20) and a revolving agitator (33) that conveys it into the discharge drum (21).

3. A frying device in accordance with claim 2, **characterized in that** the agitator (33) is connected to the output shaft (30) of an electric motor (31) by means of a plug-in coupling (34).

4. A frying device in accordance with claim 2, **characterized in that** the discharge drum (21) is provided with a slit-shaped recess (53) with a conveyor chute (23) that continues the recess (53).

5. A frying device in accordance with claim 4, **characterized in that** the conveyor chute (23) is designed to have an U-shaped profile.

6. A frying device in accordance with claim 5, **characterized in that** the parallel limbs of the U-shaped profile engage with the inner surface of the pipe-shaped part of the discharge drum (21).

7. A frying device in accordance with any one of claims 4 to 6, **characterized in that** a prolongation (54) of the downwardly inclined conveyor chute (23) passes through a cover (55) of the frying drum (20) and a cover (22) of the service drum (19).

8. A frying device in accordance with any one of claims 1 to 7, **characterized in that** the frying drum (20) and the discharge drum (21) are designed to be decomposable into their component parts.

## Revendications

1. Dispositif de friteuse permettant de frire en suspension des portions de produits alimentaires et de produits d'agrément, en particulier des portions découpées en morceaux, comportant un réservoir et une cuve de cuisson contenant de la graisse de friture liquide, reliée au réservoir par l'intermédiaire d'une goulotte de transport, présentant un dispositif de retournement transportant les portions reçues en rotation à l'intérieur de celle-ci et cuites vers une cuve d'évacuation avec une goulotte de transport permettant la décharge, **caractérisé en ce que** la cuve de cuisson (20) est configurée sous la forme d'un cylindre creux fermé de tous les côtés et est reçue en pouvant se déplacer axialement dans une cuve de service (19).

2. Dispositif de friteuse selon la revendication 1, **caractérisé en ce que**, dans la cuve de cuisson (20), est disposée une cuve d'évacuation (21) déchargeant un produit frit qui provient de la cuve de cuisson (20), et un dispositif de retournement (33) transportant les produits en rotation dans la cuve d'évacuation (21).

3. Dispositif de friteuse selon la revendication 2, **caractérisé en ce que** le dispositif de retournement (33) est relié par l'intermédiaire d'un accouplement par enfichage (34) à la sortie (30) d'un moteur électrique (31).

4. Dispositif de friteuse selon la revendication 2, **caractérisé en ce que** la cuve d'évacuation (21) présente un évidement (53) en forme de fente avec une goulotte de transport (23) raccordée à l'évidement (53).

5. Dispositif de friteuse selon la revendication 4, **caractérisé en ce que** la goulotte de transport (23) est configurée sous la forme d'un profilé en U.

6. Dispositif de friteuse selon la revendication 5, **caractérisé en ce que** les branches parallèles du profilé en U sont en prise avec la surface interne de l'élément tubulaire de la cuve d'évacuation (21).

7. Dispositif de friteuse selon l'une quelconque des revendications 4 à 6, **caractérisé en ce que** la goulotte de transport (23), inclinée vers le bas, présentant un prolongement (54), pénètre dans un couvercle (55) de la cuve de cuisson (20) et un couvercle (22) de la cuve de service (19).

8. Dispositif de friteuse selon l'une quelconque des revendications 1 à 7, **caractérisé en ce que** la cuve de cuisson (20) et la cuve d'évacuation (21) sont configurées de manière à pouvoir être divisées en leurs éléments individuels.
